# EUROPEAN PATENT SPECIFICATION

(11) **EP 3 218 737 B1**
(45) Date of publication and mention of the grant of the patent: **09.01.2019**
(21) Application number: 15805647.3
(22) Date of filing: 10.11.2015
(51) Int. Cl.: G01S 5/02, H04W 64/00, H04L 5/00

(54) **SIGNALING AND USING CRS MUTING IN SHARED CELL FOR POSITIONING**
SIGNALISIERUNG UND VERWENDUNG VON CRS-STUMMSCHALTUNG IN EINER GEMEINSAM GENUTZTEN ZELLE ZUR POSITIONIERUNG
SIGNALISATION ET UTILISATION D'UN BLOCAGE DE CRS DANS UNE CELLULE PARTAGÉE À DES FINS DE POSITIONNEMENT

(30) Priority: 10.11.2014 US 201462077736 P
(43) Date of publication of application: 20.09.2017
(73) Proprietor: Telefonaktiebolaget LM Ericsson (publ), 164 83 Stockholm (SE)
(72) Inventor: KAZMI, Muhammad, S-167 39 Bromma (SE); SIOMINA, Iana, S-183 30 Täby (SE); BEHRAVAN, Ali, S-113 36 Stockholm (SE); SESIA, Stefania, F-06330 Roquefort Les Pins (FR)
(74) Representative: Zacco Sweden AB
(86) International application number: PCT/SE2015/051192
(87) International publication number: WO 2016/076782

(56) References cited:
- US-A1- 2010 317 343
- US-A1- 2012 231 809
- US-A1- 2014 120 947
- US-A1- 2014 176 366

## Description

### Technical field

The present disclosure pertains to the field of positioning in wireless communication systems.

### Background

Several positioning methods for determining the location of the target device, which can be any of the wireless device or UE, mobile relay, PDA, wireless device for machine type communication (aka machine to machine communication), laptop mounting wireless devices or equipment, etc., exist. The position of the target device is determined by using one or more positioning measurements, which can be performed by a suitable measuring node or the target device. Dependent upon the positioning method used, the measuring node can either be the target device itself, a separate radio node (i.e. a standalone node), serving and/or neighboring nodes of the target device, etc. Also, depending upon the positioning method, the measurements can be performed by one or more types of measuring nodes.

The LTE architecture explicitly supports location services by defining the Evolved Serving Mobile Location Center (E-SMLC) that is connected to the core network (i.e. Mobility Management Entity (MME)) via the so called LCS-AP interface and the Gateway Mobile Location Center (GMLC) that is connected to the MME via the standardized Lg interface. The LTE system supports a range of methods to locate the position of the target devices (e.g. UEs) within the coverage area of the RAN. These methods differ in accuracy and availability. Typically, satellite based methods (Assisted GNSS) are accurate with a (few) meter(s) of resolution, but may not be available in indoor environments. On the other hand, Cell ID based methods are much less accurate, but have high availability. Therefore, LTE uses A-GPS as the primary method for positioning, while Cell-ID and OTDOA (Observed Time Difference of Arrival) based schemes serve as fallback methods.

US 2014/0176366 A1 describes a method of providing observed time difference of arrival (OTDOA) assistance information to a mobile station. Muting patterns may be used to further facilitate distinguishing between PRS sequences transmitted from different physical transmitting antenna elements.

US 2010/0317343 A1 describes a wireless terminal receiving signalling information pertaining to a reference signal transmission in at least one specifically designated sub frame. The terminal determines based on the information the time frequency resources associated with a reference signal transmission intended for OTDOA measurements from a transmitting base station.

US 2012/023180 A1 describes solutions for using a mix of reference signal types in a wireless communication network, e.g. a first type and a second type, in making positioning-related measurements.

### Summary

In shared cell deployments, the accuracy of positioning using cellular reference signaling may be negatively affected due to multiple transmission points with different locations providing comparable signaling. It is an object of this disclosure to provide approaches overcoming or ameliorating this issue.

There is disclosed a method for operating a network node according to claim 1.

Moreover, there is disclosed a network node according to claim 2.

Also, a method for operating a user equipment according to claim 3 is disclosed.

A user equipment according to claim 4 is described as well.

Moreover, there is disclosed a program product according to claim 5.

In addition, there is disclosed a carrier medium according to claim 6.

According to the described approaches, muting of CRS transmissions by one of a plurality of transmission points of a shared cell may be taken into account for performing measurements, in particular timing measurements for positioning.

### Brief description of the drawings

The drawings are provided for illustrative purposes, and are not intended to limit the approaches to the embodiments shown.
Figure 1 shows an example for a positioning architecture in LTE;
Figure 2 shows a shared cell with one macro and a few RRHs all using the same cell ID (aka PCI);
Figure 3 shows an example of a shared cell with 3 TPs, wherein the CRS from TP2 is muted for a certain time;
Figure 4 shows an example of a shared cell with 4 TPs, wherein the CRS from TP3 is muted but all 4 TPs transmit CSI-RSs.
Figure 5 shows an example of a shared cell with 4 TPs (one of them an eNB), wherein the eNB sends muting pattern information to the positioning node, and the UE sends measurements to the positioning node.
Figure 6 schematically shows an exemplary user equipment.
Figure 7 schematically shows an exemplary network node.
Figures 8a and 8b schematically show an exemplary flowchart of a method for operating a user equipment and a corresponding user equipment, respectively.
Figures 9a and 9b schematically show an exemplary flowchart of a method for operating network node and a corresponding network node, respectively.

### Detailed description

In LTE, the positioning node (aka E-SMLC or location server) configures the target device (e.g. wireless device or UE), eNodeB or a radio node dedicated for positioning measurements (e.g. LMU) to perform one or more positioning measurements depending upon the positioning method. The positioning measurements are used by the target device or by a measuring node or by the positioning node to determine the location of the target device. In LTE, the positioning node communicates with a UE using the LTE positioning protocol (LPP), and with an eNodeB using the LTE positioning protocol annex (LPPa).

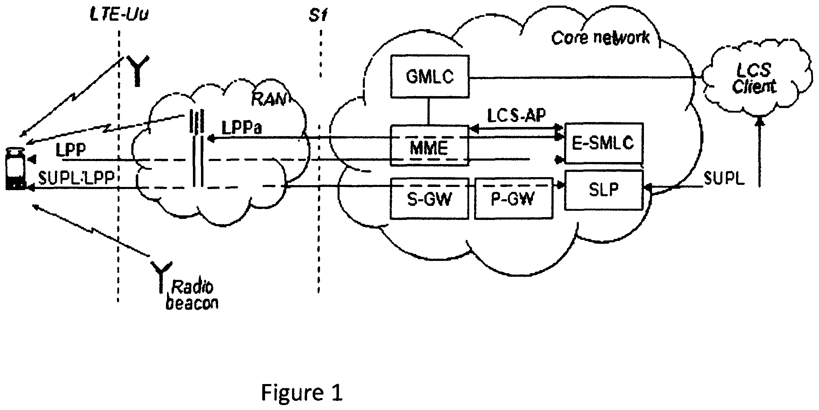

The LTE positioning architecture is shown in figure 1. The three key network elements in an LTE positioning architecture are the LCS Client, the LCS target and the LCS Server. The LCS Server is a physical or logical entity managing positioning for a LCS target device by collecting measurements and other location information, assisting the terminal in measurements when necessary, and estimating the LCS target location. A LCS Client is a software and/or hardware entity that interacts with a LCS Server for the purpose of obtaining location information for one or more LCS targets, i.e. the entities being positioned. LCS Clients may also reside in the LCS targets themselves. An LCS Client sends a request to LCS Server to obtain location information, and LCS Server processes and serves the received requests and sends the positioning result and optionally a velocity estimate to the LCS Client. A positioning request can be originated from the terminal or a network node or external client.

Position calculation can be conducted, for example, by a positioning server (e.g. E-SMLC or SLP in LTE) or UE. The former approach corresponds to the UE-assisted positioning mode when it is based on UE measurements, whilst the latter corresponds to the UE-based positioning mode.

E-CID Positioning is described in the following. E-CID positioning uses one or more radio measurements for determining the target device's position. The E-CID approach uses at least the cell ID of a serving and/or a neighboring cell and at least one additional radio measurements which can be performed by the target device or by a radio node. For example, in E-CID, there is typically used any combination of cell ID and radio measurements such as UE Rx-Tx time difference, BS Rx-Tx time difference, timing advanced (TA) measured by the BS, LTE RSRP and/or RSRQ, HSPA CPICH measurements (CPICH RSCP and/or CPICH Ec/No), angle of arrival (AoA) measured by the BS on UE transmitted signals, etc., for determining the position of the target device. The TA measurement is done using either UE Rx-Tx time difference or BS Rx-Tx time difference or both. The location server may use several methods to determine the position of the target device. The E-CID positioning can also be target device based method or target device assisted method.

One important category of measurements used for E-CID belongs to the timing measurements. In LTE among the following timing measurements for E-CID positioning are standardized in release 9:
1. UE Rx-Tx time difference,
2. eNodeB Rx-Tx time difference,
3. Timing advance (TA).

The definitions of these measurements are shown below:
UE Rx - Tx time difference:

| | |
|---|---|
| **Definition** | The UE Rx - Tx time difference is defined as T_{UE-RX} - T_{UE-TX} |
| | |
| | Where: |
| | T_{UE-RX} is the UE received timing of downlink radio frame #i from the serving cell, defined by the first detected path in time. |
| | T_{UE-TX} is the UE transmit timing of uplink radio frame #i. |
| | |
| | The reference point for the UE Rx - Tx time difference measurement shall be the UE antenna connector. |
| **Applicable for** | RRC_CONNECTED intra-frequency |

eNB Rx - Tx time difference:

| | |
|---|---|
| **Definition** | The eNB Rx - Tx time difference is defined as T_{eNB-RX} -T_{eNB-TX} |
| | |
| | Where: |
| | T_{eNB-RX} is the eNB received timing of uplink radio frame #i, defined by the first detected path in time. |
| | The reference point for T_{eNB-RX} shall be the Rx antenna connector. |
| | T_{eNB-TX} is the eNB transmit timing of downlink radio frame #i. |
| | The reference point for T_{eNB-TX} shall be the Tx antenna connector. |

Timing advance measurement (T_{ADV}):

| **Definition** | Type1: |
|---|---|
| | Timing advance (T_{ADV}) type 1 is defined as the time difference |
| | |
| | T_{ADV} = (eNB Rx - Tx time difference) + (UE Rx - Tx time difference), |
| | where the eNB Rx - Tx time difference corresponds to the same UE that reports the UE Rx - Tx time difference. |
| | |

| | Type2: |
|---|---|
| | Timing advance (T_{ADV}) type 2 is defined as the time difference |
| | |
| | T_{ADV} = (eNB Rx - Tx time difference), |
| | where the eNB Rx - Tx time difference corresponds to a received uplink radio frame containing PRACH from the respective UE. |

The above measurements are similar to round trip time (RTT) measurements used in earlier systems. These measurements are based on both DL and UL transmissions. In particular, for UE Rx-Tx, the UE measures the difference between the time of the received DL transmission that occurs after the UE UL transmission and the time of the UL transmission. For eNodeB Rx-Tx, the eNodeB measures the difference between the time of the received UL transmission that occurs after the eNodeB DL transmission and the time of the DL transmission. All these measurements are currently done on PCell. However they could also be potentially performed on one or more SCells if UE supports carrier aggregation with 2 or more UL CCs. In addition in LTE there are timing measurements which are implementation dependent and not explicitly standardized. One such example is one-way propagation delay, which is measured by eNodeB for estimation of timing advanced to be signalled to the UE.

LTE OTDOA Positioning is described in the following. In LTE the OTDOA method uses UE measurements related to time difference of arrival of signals from radio nodes for determining UE position. To speed up OTDOA measurements and also to improve their accuracy, the positioning server provides OTDOA assistance information to the target device. The OTDOA can also be UE based or UE assisted positioning method. In the former the target device determines its location itself whereas in the latter the positioning server (e.g. E-SMLC) uses the received OTDOA measurements from the target device to determine the location of the target device.

The LTE OTDOA UE measurement is performed on positioning reference signal (PRS). Each RSTD measurement is performed on PRS transmitted by a reference cell and PRS transmitted from a neighboring cell. To achieve sufficient positioning accuracy the RSTD measurements from multiple distinct pair of sites (reference and neighbor cells) are required. PRS are transmitted in pre-defined positioning subframes grouped by several consecutive subframes (*N_{PRS}*), i.e. one *positioning occasion,* which occur periodically with a certain periodicity of *N* subframes, i.e. the time interval between two positioning occasions. The periods *N* are 160, 320, 640, and 1280 ms, and the number of consecutive subframes *N_{PRS}* can be 1, 2, 4, or 6. Shared cell

A shared cell is a type of downlink (DL) coordinated multi-point (CoMP) where multiple geographically separated transmission points (TPs) dynamically coordinate their transmission towards the UE. The unique feature of shared cell is that all transmission points within the shared cell have the same physical cell ID (PCI). This means that the UE cannot distinguish between the TPs by the virtue of the PCI decoding. The PCI is acquired during a measurement procedure e.g. cell identification etc. A TP may comprise one or more antenna ports. The TP can be uniquely identified by a unique identifier aka TP ID. Herein, a TP may also interchangeably be called as a cell portion. A cell portion is a geographical part of a cell e.g. shared cell. A cell portion is semi-static and identical for both the UL and the DL. Within a cell, a cell portion is uniquely identified by its Cell Portion ID. TP ID and cell portion ID may be interchangeably used.

The shared cell approach can be implemented by distributing the same cell specific signals on all points (within the macro point coverage area). With such a strategy, the same physical signals such as primary synchronization signals (PSS), secondary synchronization signals (SSS), cell specific reference signals (CRS), positioning reference signal (PRS) etc. and the same physical channels such as physical broadcast channel (PBCH), physical downlink shared channel (PDSCH) containing paging and system information blocks (SIBs), control channels (PDCCH, PCFICH, PHICH) etc. are transmitted from each TP in the DL. Tight synchronization in terms of transmission timings between the TPs within a shared is used e.g. in order of ±100 ns between any pair of nodes. This enables the physical signals and channels transmitted from *M* points to be combined over air. The combining is similar to what is encountered in single-frequency networks (SFN) for broadcast.

Each TP may also be configured to transmit CSI-RS signals which are unique to each TP. Therefore the CSI-RS enables the UE to uniquely identify a TP within a shared cell. The UE may also use the CSI-RS for performing measurement (e.g. CSI-RSRP) which in turn enables the UE to determine the strongest TP within a shared cell.

Generally, a TP may be defined by a transmitter/receiver/transceiver arrangement of the network, e.g. by a network node. Different TPs with the same cell identity (e.g. PCI) may be provided for example in a heterogeneous network with a macro node and one or more micro (or pico/femto) nodes or remote radio heads (RRH) sharing the same identity.

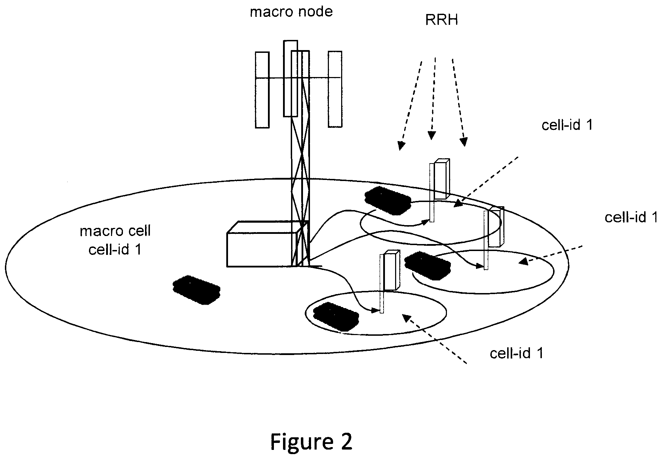

Figure 2 shows a shared cell with one macro cell and a few RRHs all using the same cell ID (aka PCI).

The term shared cell may be used interchangeably with other, similar terms, such as CoMP cluster with common cell ID, cluster cell with common cell ID , combined cell, a cell with multiple RRHs, RRU, distributed antenna system (DAS), heterogeneous network with shared cell ID, etc. Similarly, the term transmission point also may be used interchangeably with other similar terms, such as radio node/s, radio network node/s, base station, RRH, radio units, remote antenna, etc. For consistency, the term shared cell as generic term is used in this disclosure. Furthermore, the term transmission point (TP) is used for individual nodes within or of a shared cell.

Shared cells are widely deployed, such that all TPs of the shared cell are associated with the cell shared cell ID, i.e. PCI. Therefore, in a shared cell, certain types of reference signals (e.g. CRS, PSS/SSS etc.) transmitted from TPs within the same shared cluster or cell are common, i.e. use the same sequence. However, to avoid or minimize interference at the UE, one or more types of such common reference signals can be muted in one or more TPs. Such TPs, however, may still transmit TP specific signals or TP specific reference signals such as CSI-RS. The UE may perform one or more positioning measurements on common reference signals (e.g. UE Rx-Tx time difference measurement, RSTD etc.).

However, the UE and the positioning node may not be aware that certain TPs within the shared cell mute one or more common reference signals used for positioning measurements. Due to the lack of this information, the UE and/or positioning node may inaccurately determine the UE location. A shared cell can be very large, for example the TPs can be typically located in distances between 100m to 2 km. Therefore, large error in positioning accuracy can occur if an incorrect TP (as an incorrect source of reference signaling) is considered for determining the UE location.

There are disclosed methods for operating a network node, a wireless device or UE and positioning node and corresponding network nodes, wireless devices or UEs and positioning nodes.

In particular, there is disclosed a method for operating a network node (e.g. a serving TP and/or a controlling and/or coordinating node) in a shared cell with at least two or more transmission points (TPs; one of the TPs may be provided by and/or be the network node respectively serving TP), wherein the TPs (e.g. network node respectively serving TP and neighbor TPs) use the same cell ID (aka PCI). The method comprises any one or any combination of the following steps or actions:
- Obtaining information that at least one TP in the shared cell mutes CRS transmission;
- Using the obtained information for one or more of the following tasks:
- Transmitting the obtained information about CRS muting in the at least one TP to a positioning node and/or to a UE;
- Using the obtained information for determining the TP on which the UE performs or has performed a timing measurement that involves measurement on CRS;
- Using the obtained information for determining a TP to be considered by the network node (respectively serving TP) for performing a timing measurement that involves measurement on signals (e.g. SRS, RACH) transmitted by the UE.

There is also disclosed a network node (e.g. a serving TP and/or a controlling and/or coordinating node) for a wireless communication network. The network node may be adapted for operation in a shared cell with at least two or more transmission points (TPs; one of the TPs may be provided by and/or be the network node respectively serving TP), wherein the TPs (e.g. network node respectively serving TP and neighbor TPs) use the same cell ID (aka PCI). The network node may be adapted for any one or any combination of the following steps or actions:
- Obtaining information that at least one TP in the shared cell mutes CRS transmission; the network node may comprise an information obtaining module for performing this obtaining;
- Using the obtained information for one or more of the following tasks; the network node may comprise an information using module for performing this using the obtained information:
- Transmitting the obtained information about CRS muting in the at least one TP to a positioning node and/or to a UE; the information using module may comprise and/or be implemented as a transmitting module for this transmitting;
- Using the obtained information for determining the TP on which the UE performs or has performed a timing measurement that involves measurement on CRS; the information using module may comprise and/or be implemented as a determining module for this determining;
- Using the obtained information for determining a TP to be considered by the network node (respectively serving TP) for performing a timing measurement that involves measurement on signals (e.g. SRS, RACH) transmitted by the UE. The information using module may comprise and/or be implemented as a TP determining module for this determining.

The network node may generally be a positioning node and/or a radio network node. A serving TP may be considered to be a radio network node, e.g. a base station or eNodeB.

There is also disclosed a method for operating a UE served by a network node (e.g. a serving TP and/or controlling node and/or coordinating node) in a shared cell with two or more transmission points (TPs; one of the TPs may be provided by and/or be the network node respectively serving TP), wherein the TPs (network node respectively serving TP and neighbor TPs) use the same cell ID (e.g. PCI). The method comprises any one or any combination of the following steps:
- Obtaining information that at least one TP in the shared cell mutes CRS transmission;
- Performing at least a first measuring, which may be a timing measuring, (e.g. UE Rx-Tx time difference) in the shared cell, wherein the first measuring involves one or more than one measurements on CRS signals;
- Performing at least a second measuring (e.g. CSI-RSRP) on two or more TPs in the shared cell, wherein the second measuring involves one or more than one measurements on at least a reference signal (e.g. CSI-RS), which is unique for each TP;
- Using the following information to determine on which TP the first measuring has actually been or is being performed by the UE based on:
   ∘ The obtained information on CRS muting in one or more TPs;
   ∘ The performed first (timing) measuring;
   ∘ The performed second measuring.
- Using (optionally) the determined TP and at least the first (timing) measuring for determining the location of the UE or wireless device.

There is also disclosed wireless device or UE for a wireless communication network. The wireless device or UE may be adapted to be served by a network node (e.g. a serving TP and/or controlling node and/or coordinating node) in a shared cell with two or more transmission points (TPs; one of the TPs may be provided by and/or be the network node respectively serving TP), wherein the TPs (network node respectively serving TP and neighbor TPs) use the same cell ID (aka PCI). The wireless device or UE may be adapted for any one or any combination of following steps or actions:
- Obtaining information that at least one TP in the shared cell mutes CRS transmission; the wireless device or UE may comprise an information obtaining module for this obtaining;
- Performing at least a first measuring, which may be a timing measuring, (e.g. UE Rx-Tx time difference) in the shared cell, wherein the first measuring involves one or more measurements on CRS signals; the wireless device or UE may comprise a first measuring module for this at least first measuring;
- Performing at least a second measuring (e.g. CSI-RSRP) on two or more TPs in the shared cell, wherein the second measuring involves one or more than one measurements on at least a reference signal (e.g. CSI-RS), which is unique for each TP; the wireless device or UE may comprise a second measuring module for this at least second measuring;
- Using the following information to determine on which TP the first measuring has actually been or is being performed by the wireless device or UE based on; the wireless device or UE may comprise an information using module for this using of information;
   ∘ The obtained information on CRS muting in one or more TPs;
   ∘ The performed first (timing) measuring;
   ∘ The performed second measuring.
- Using (optionally) the determined TP and at least the first (timing) measuring for determining the location of the UE or wireless device. The wireless device or UE may comprise a location determining module for this determining.

Generally, each TP may be adapted to and/or may provide and/or have associated to it a unique reference signal to be measured for the second measuring.

Accordingly, common reference signals that are common in all TPs in a shared cell such as CRS, PSS/SSS etc., may be muted in one or more TPs in the shared cell to reduce interference; however positioning accuracy based on timing measurements or measuring involving such common reference signals can still be maintained.

Muting may comprise turning off the signal and/or not sending the signal and/or sending the signal at a low power level, which may be significantly lower than a power level of the non-muted signal (e.g. lower than 50%, 20%, 10% or 5% of the non-muted signal).

The approaches presented enables the UE or wireless device and network node (e.g. positioning node) to unambiguously determine one or more TPs in the shared cell where the common reference signals used for positioning measurements are muted. This allows the wireless device or UE and network node to enhance positioning measurement performance and thus maintain the positioning accuracy for the wireless device or UE.

A wireless device and UE are used interchangeably in the description. A UE may comprise any device equipped with a radio interface and capable of at least generating and transmitting a radio signal to a radio network node. Note that even some radio network nodes, e.g., a relay, an LMU, or a femto BS or node (aka home BS), may also be equipped with a UE-like interface, e.g., transmitting in UL and receiving in DL. Some example of "UE" that are to be understood in a general sense are PDA, laptop, mobile, iPOD, iPAD, sensor, fixed relay, mobile relay, wireless device capable of device-to-device (D2D) communication, wireless device for short-range communication (e.g., Bluetooth), wireless device capable of machine-to-machine (M2M) communication (aka machine type communication), customer premise equipment (CPE) for fixed wireless access, any radio network node equipped with a UE-like interface (e.g., small RBS, eNodeB, femto BS, LMU).

A network node may be a radio node, which may be characterized by its ability to transmit and/or receive radio signals and it comprises at least a transmitting or receiving antenna, own or shared with another radio node. A radio node may be a wireless device or UE or a radio network node. Some examples of radio nodes are a radio base station (e.g., eNodeB in LTE or NodeB in UTRAN), a relay, a mobile relay, remote radio unit (RRU), remote radio head (RRH), a sensor, a beacon device, a measurement unit (e.g., LMUs), user terminal, PDA, mobile, iPhone, laptop, etc. A radio node may be capable of operating or receiving radio signals or transmitting radio signals in one or more frequencies, and may operate in single-RAT, multi-RAT or multi-standard mode (e.g., an example dual-mode user equipment may operate with any one or combination of WiFi and LTE or HSPA and LTE/LTE-A; an example eNodeB may be a dual-mode or MSR BS).

A measuring node may be a radio node adapted for performing signals on radio signals. Depending on the variants, the measuring node may perform measurements on DL signals (e.g., a wireless device or a radio network node equipped with a UE-like interface, relay, etc.) or UL signals (e.g., a radio network node in general, eNodeB, WLAN access point, LMU, etc.). A measuring node may be a network node, in particular a controlling node or a coordinating node.

A radio network node is a radio node for and/or comprised in a radio access network, unlike user terminals or mobile phones. A radio network node e.g., including eNodeB, single- or multi-RAT BS, multi-standard BS, RRH, LMU, RRU, WiFi Access Point, or even transmitting-only/receiving-only nodes, may or may not create own cell and may comprise in some examples a transmitter and/or a receiver and/or one or more transmit antennas or one and/or more receive antennas, where the antennas are not necessarily co-located. It may also share a cell with another radio node which creates own cell. More than one cell may be associated with one radio node. Further, one or more serving cells (in DL and/or UL) may be configured for a UE, e.g., in a carrier aggregation system where a UE may have one Primary Cell (PCell) and one or more Secondary Cells (SCells). A radio network node may also comprise or be comprised in multi-antenna or distributed antenna system.

A network node may be any radio network node or core network node. Some nonlimiting examples of a network node are an eNodeB, RNC, positioning node, MME, PSAP, SON node, TCE, MDT node, (typically but not necessarily) controlling or coordinating node, a gateway node, and O&M node.

A positioning node described in different variants is a node with positioning functionality. For example, for LTE it may be understood as a positioning platform in the user plane (e.g., SLP in LTE) or a positioning node in the control plane (e.g., E-SMLC in LTE). SLP may also consist of SLC and SPC, where SPC may also have a proprietary interface with E-SMLC. Positioning functionality may also be split among two or more nodes, e.g., there may be a gateway node between LMUs and E-SMLC, where the gateway node may be a radio base station or another network node; in this case, the term "positioning node" may relate to E-SMLC and the gateway node. In some examples, positioning functionality may also fully or partly reside in a radio network node (e.g., RNC or eNB). In a testing environment, a positioning node may be simulated or emulated by test equipment.

The term "coordinating node" used herein is a network and/or node, which coordinates radio resources with one or more radio nodes and may also be used interchangeably with "controlling node". Some examples of the coordinating node are network monitoring and configuration node, OSS node, O&M, TCE, MDT node, SON node, positioning node, MME, a gateway node such as Packet Data Network Gateway (P-GW) or Serving Gateway (S-GW) network node or femto gateway node, a macro node coordinating smaller radio nodes associated with it, eNodeB coordinating resources with other eNodeBs, etc.

The signaling described herein may either via direct links or logical links (e.g. via higher layer protocols and/or via one or more network and/or radio nodes). For example, signaling from a coordinating node may pass another network node, e.g., a radio network node.

The approaches and concepts described herein are not limited to LTE, but may apply with any Radio Access Network (RAN), single- or multi-RAT with or without carrier aggregation support. Some other RAT examples are LTE-Advanced, UMTS, HSPA, GSM, cdma2000, WiMAX, and WiFi.

The variants are in particular applicable when doing measurement in a shared cell on an intra-frequency carrier, on inter-frequency carrier with or without gaps or on any multi-carrier system.

There are disclosed several examples and aspects, which are described in the following sections.

The variants described in this section may be combined with other variants described in other sections.

A scenario comprises at least one shared cell comprising at least two transmission points (TP). A radio network node (e.g., a network node like a controlling or coordinating node, e.g. an eNodeB) may be or provide one of the transmission points, in particular a serving TP. The shared cell transmits:
- At least one type of shared cell specific (or common) reference signal called hereinafter as a first reference signal of a first type and
- At least one type of TP specific reference signal called hereinafter as a first reference signal of a second type.

The first reference signal of the first type is common to all TPs in the same shared cell and it enables the UE to identify the PCI of the shared cell. Examples of the reference signals of the first type are CRS, PSS, SSS, discovery reference signal etc.

Each first reference signal of the second type is unique to each TP in the same shared cell and it enables the UE to uniquely identify a TP within the shared cell. An example of the first reference signal of the second type is CSI-RS.

It is assumed that the UE performs a measuring (which may be called second measuring), e.g. at least one measurement (e.g. CSI-RSRP, CSI-RSRQ, CSI-RS SINR etc.) on one or more TPs on at least the first reference signal of the second type.

The UE and/or one or more TPs within the shared cell may also perform, as example for a first measuring, one or more timing measurements for positioning e.g. UE Rx-Tx time difference, eNB Rx-Tx time difference etc. The UE and/or TPs may also report the timing measurement results to the network, e.g. a network node and/or a positioning node, for example directly or via another node (e.g., a TP may be reporting via an associated eNodeB).

In one or more TPs in the shared cell the first reference signal of the first type and/or first reference signal of the second type may be muted over certain time period or for unlimited time or unspecified or unforeseeable time. A time period can be a symbol, time slot, subframe, frame or a group of symbols, time slots, subframes, frames etc.

The muting may also apply over the whole bandwidth or its part. A muted reference signal and/or muting a signal may mean that the signal or reference signal is not transmitted by the TP or transmitted at a very low transmit power (e.g., when below -40 dBm when the power amplifier is not completely turned off during the muting). For example if the first reference signal of the first type (e.g. CRS) is muted in a TP (e.g. TP with TP ID#2) then it means that the TP (with ID#2) does not transmit the first reference signal of the first type during at least a certain time period or for unlimited or unspecified time. Signals like reference signals may, e.g., be muted in one or more TPs to lower or avoid interference at the UE.

A network or network node, e.g. a coordinating node and/or controlling node or eNodeB, may be adapted to mute one or more signals or reference signals from one or more TPs (which may include itself, if it is a radio network node), e.g. by sending corresponding information or commands to the TPs; this may e.g. performed by a base station or eNodeB in a heterogeneous network, wherein the muted TPs (a muted TP may be a TP having at least one muted signal) may be micro nodes (or pico/femto nodes) and/or RRHs.

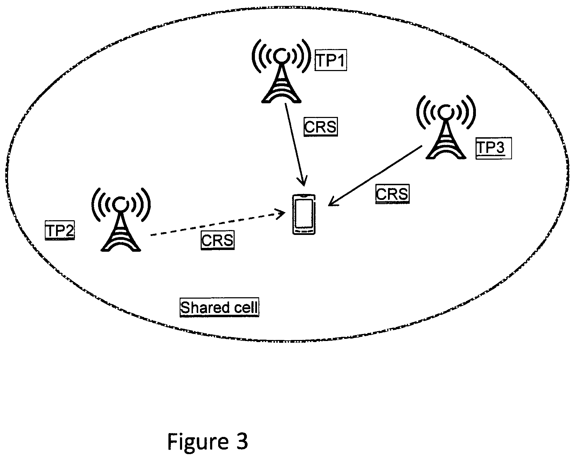

Figure 3 shows an example of a shared cell with 3 TPs, where the CRS from TP2 is muted for a certain time.

Method in network node of obtaining and using shared cell CRS muting information for positioning related operations

In this variant a network node (e.g. serving TP) for wireless communication network and/or for operation in a shared cell may be adapted to perform, and/or a network node in a shared cell may perform, any one or any combination of the following :
- Obtaining information that at least the first reference signal of the first type (e.g. CRS) is not transmitted and/or muted in one or more other TPs belonging to the same shared cell; the network node may comprise an information obtaining module for this obtaining.
- Using the obtained information about the TP(s) in which the first reference signal of the first type (e.g. CRS) is not transmitted or is muted and/or about the TP(s) in which the first reference signal of the first type (e.g. CRS) is not muted for one or more tasks related to positioning (as described herein). The network node may comprise an information using module for this using.

Obtaining information about the TPs where the first reference signal of the first type is muted and/or not transmitted may include and/or be based on one or more of the following:
- Pre-defined e.g. corresponding information may be stored in the network node and/or a memory accessible to control circuitry of the network node.
- Based on indication received from the TPs that mute the first reference signal of the first type; the information obtaining module may comprise a corresponding receiving module;
- Based on indication received from another network node which is not a muted TP; the information obtaining module may comprise a corresponding indication receiving module;
- Based on indication received from a UE operating in the shared cell with at least one muted TP; the information obtaining module may comprise a corresponding UE indication receiving module;
- Determining based on measurements or listening the signals that may or may not be muted (for example: if the result of attempting to receive a signal is below a threshold the signal may be considered as muted; in another example, it may determine that a TP is muted in one or more time instances by comparison to a threshold the difference between two measurements performed in at least two non-overlapping time instances (in the first instance the measured signal may be muted and it may be not muted in the second time instance); the information obtaining module may comprise a corresponding determining module;

The information about muting of RS in TPs may comprise and/or comprise of any one or any combination of:
- At least TP IDs or cell portion IDs associated with the TP.
- The information may comprise information about the shared cell of the muted TP, e.g., an indication of whether this is the same or a different shared cell which is also comprising the receiving TP; a shared cell ID;
- The information may comprise the type of reference signal (e.g. CRS) that is muted in one or more TPs. It may also be pre-defined that information element (IE) (aka RS muted IE) containing TP IDs or cell portion IDs where RS are muted is signaled by the network node then the IE is associated with or corresponds to the muting of certain type(s) of reference signal (e.g. CRS, PSS, SSS etc.) in one or more TPs.
- The information may comprise one or more (e.g., periodic) time instances over which the first reference signal of the first type is muted.
- The information may comprise one or more frequency-domain resources (e.g., full or a part of the bandwidth, frequency carrier, band, subband, one or a set of RBs, etc.) over which the first reference signal of the first type is muted.

A method in network node of signaling shared cell CRS muting information to other nodes is discussed in the following. The network node may signal, or be adapted to signal, after obtaining the information about the muting of the first reference signal of the first type in one or more TPs, the obtained information to other nodes, e.g. via transmitting them. Examples of such other nodes may include:
- Positioning node, and/or
- Another radio network node (e.g., another TP, eNodeB associated with the muted TP, etc.), and/or
- One or more than one wireless device or UE, and/or
- A Node that performs positioning measurement on signals transmitted by the UE e.g. an LMU.

The network node may signal and/or be adapted to signal the obtained information to other nodes in one or more of the following manner; the network node may comprise a signaling module for such signaling:
- Proactively whenever network node obtains information about muting of the first reference signal of the first type in one or more TPs;
- In response to request received from the other node;
- Periodically;
- Whenever there is a change or modification of muting of the first reference signal of the first type in one or more TPs.
- With dedicated signaling, multicast or broadcast (e.g., an eNodeB may broadcast the information about muting in one or more of its TPs).

A method in network node of using the obtained shared cell CRS muting information for positioning is discussed in the following.

Using the information for positioning or locating the wireless device, e.g. by the network node (e.g. serving TP), may comprise using the obtained information about the muting of the first reference signal of the first type for determining the TP which is geographically closest to the UE and/or the TP which has shortest propagation delay with respect to the UE. For determining the closest TP for the UE, the using, e.g. by network node, may also comprise using one or more additional UE and/or network node measurements along with the obtained information about the muting of the first reference signal of the first type. For example the network node may obtain, and/or be adapted to obtain and/or comprise a measurement obtaining module for obtaining, the UE measurements such as the UE Rx-Tx time difference measurement performed on common RS in shared cell, CSI-RSRP and/or CSI-RSRQ measurement performed on one or more RS specific to TP etc. Alternatively or additionally, the network node may obtain, and/or be adapted to obtain and/or comprise a node measurement obtaining module for obtaining, network node measurements such as the TP Rx-Tx time difference measurements for one or more TPs, TA, propagation delay between UE and shared cell or between UE and each TP etc. Obtaining may comprise measuring and/or receiving corresponding information from another node and/or the network and/or a wireless device.

The determination of the closet TP with respect to UE is explained with few examples assuming that a shared cell has N TPs (TP1, TP2, TP3,... ,TP_{N}):
- In one example it may be assumed that the network node determines that the first reference signal of the first type (e.g. CRS) is muted in TP3. The network node also receives from the UE the measurement results of CSI-RSRP performed by UE on TP1, TP2, TP3 and TP4. The UE also reports UE Rx-Tx time difference measurement performed on signals transmitted by the UE (e.g. SRS) in the shared cell and on signals (e.g. CRS) received at the UE from shared cell. The downlink component of the UE Rx-Tx time difference measurement is based on first detected path and should therefore be from the closest TP that transmits (non-muted) the first reference signal of the first type (e.g. CRS). Assuming that the received CSI-RSRP values for TP1, TP2, TP3 and TP4 are -80 dBm, -75 dBm, -70 dBm and -90 dBm respectively. The maximum CSI-RSRP is -70 dBm corresponding to TP3. The network node uses the obtained information about the muting of the first reference signal of the first type (e.g. CRS) in TP3 to determine that the closest or strongest TP is TP2 and not TP3 (during the time instances when TP3's transmission is muted) i.e. TP corresponding to the second strongest CSI-RSRP. The network node can also determine the location of the UE based on UE and/or BS measurements and determination of closest TP of the UE.

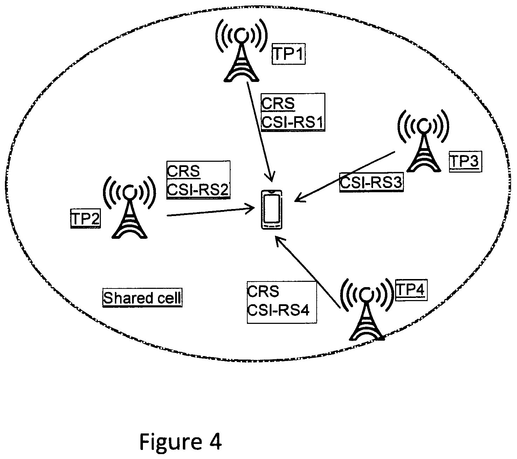

Figure 4 shows an example of a shared cell with 4 TPs, where the CRS from TP3 is muted but all 4 TPs transmit CSI-RSs.
- In an extension to the above example the network node may further perform TP Rx-Tx time difference measurement on TPs other than TP3 (where CRS is muted) and further determine whether or not TP2 is the closest TP for the UE e.g. determination is based on smallest absolute value of TP Rx-Tx time difference measurement result. Assume magnitude of TP Rx-Tx time difference measurement results from TP1, TP2 and TP3 are 40 Ts, 30 Ts and 20 Ts respectively. Then in this example the closest TP is TP2; even though TP3 has smallest measurement value but TP3 has muted CRS so it is ignored by the network node.

A method in a UE of obtaining and using shared cell CRS muting information for positioning related operations is discussed in the following. In this variant the UE may receive, and/or be adapted to receive and/or comprise an information obtaining and/or receiving module for receiving, (e.g., via dedicated signaling or multicast or broadcast) information from a network, e.g. a network node, or another UE about the muting of the first reference signal of the first type (e.g. CRS) in one or more TPs in a shared cell and may use, and/or be adapted to use and/or comprise an information using module for using, the received information for one or more positioning related tasks. The information about the muting of RS in TPs may be the same as described herein.

The network node can be a serving TP (e.g. serving eNB) or it can be a positioning node or can be a radio network node associated with another cell.

Receiving the above information may comprise receiving it in a positioning request message (e.g. LPP), assistance information, in a measurement configuration message (e.g. via RRC message), in system information of a cell, etc. The UE may also determine, and/or be adapted to determine and/or comprise a determining module for determining, that a TP is muted in one or more time instances, e.g., comparison to a threshold the difference between two measurements performed in at least two non-overlapping time instances (in the first instance the measured signal may be muted and it may be not muted in the second time instance).

Receiving, e.g. by the UE, may comprise receiving the above information proactively such as periodically or in response to a request sent by the UE to other node that contains the above information.

Using the received information about the muting of the first reference signal of the first type in one or more TPs for one or more positioning related tasks may comprise any one or any combination of:
- Performing a positioning measurement, based on the obtained muting information.
- Performing a positioning measurement on a weaker TP when a close/stronger TP is muted, i.e., when the interference is low. This may be crucial for positioning if the UE needs to measure on multiple TPs (and some of them may be quite weak) so its location could be determined.
- The UE may transmit the received information to another node. For example the UE may receive the information about the muting of CRS in TPs which belong to the shared cell and transmit the received information or part of it (e.g. only TP IDs) to the positioning node. The using module may comprise a corresponding transmitting module.
- The UE uses the received information for determining the strongest or closet TP with respect to the UE in the shared cell. For example the UE performs the UE Rx-Tx time difference measurement in the shared cell i.e. the downlink component of the UE Rx-Tx time difference measurement is done on CRS which is common in all TPs in the shared cell. The UE in order to determine the strongest or closet TP with respect to the UE, the UE also performs CSI-RSRP measurements on CSI-RS which is specific to each TP. Therefore each CSI-RSRP measurement result enables the UE to uniquely determine the corresponding TP that transmits a particular CSI-RS sequence. This is because CSI-RS is associated with a TP ID. Assume that the UE measured CSI-RSRP values for TP1, TP2, TP3 and TP4 are -80 dBm, -75 dBm, -70 dBm and -90 dBm respectively. The maximum CSI-RSRP is -70 dBm corresponding to TP3. Further assume that based on received information, the UE determines that the CRS are muted in TP3 in the shared cell. The UE therefore uses the obtained information about the muting of the first reference signal of the first type (e.g. CRS) in TP3 to determine that the closest or strongest TP is TP2 and not TP3 i.e. TP corresponding to the second strongest CSI-RSRP. The UE therefore assumes that TP2 (i.e. coordinates such as latitude, longitude etc.) is the TP closest to the UE when determining its own location (Figure 4). In another example, the UE may actually perform measurements selectively in non-muted time instances of TP3 which are determined based on the muting information.
- The UE after determining the closest TP (e.g. TP2 in the above example) may associate its TP ID with the positioning measurement results in the shared (e.g. UE Rx-Tx time difference measurement, OTDOA RSTD etc.) and transmit them to another network node (e.g. positioning node).
- Selecting another signal type from the same TP for the measurement when the first signal is muted and using the first signal for the measurement otherwise.
- Performing a measurement in non-muted time instances on the signal that is muted; performing a measurement on another signal from the same TP when the first signal is muted; combining two measurements into one measurement result.

A method in positioning node of obtaining and using shared cell CRS muting information for positioning related operations is discussed in the following. In this variant, a positioning node, in particular a positioning server (e.g. E-SMLC), receives, and/or may be adapted to receive and/or may comprise an information receiving module for receiving, information from a network node (e.g. eNodeB, TPs, O&M, OSS etc.) and/or from a UE about the muting of the first reference signal of the first type (e.g. CRS) in one or more TPs in a shared cell and uses the received information for one or more positioning related tasks. The information about the muting of RS in TPs is the same as described herein. It may be considered that the positioning node is a network node, e.g. of a core network, and/or not a radio network node.

Receiving, e.g. by the positioning node, of the above information may comprise receiving the information proactively, such as periodically from the network node and/or from the UE, and/ or in response to a request for the information sent by the positioning node to another node (e.g. to eNB over LPPa).

Alternatively or additionally, the positioning node may determine, and/or be adapted to determine and/or comprise a determining module for determining, this information, e.g. based on collected measurements, e.g., by comparing to a threshold the difference between two measurements performed in at least two non-overlapping time instances (in the first instance the measured signal may be muted and it may be not muted in the second time instance). Determining and/or receiving the information may be considered as obtaining the information.

The positioning node may use, and/or be adapted to use and/or comprise an information using module for using, the above mentioned obtained, e.g. received and/or determined, information (e.g. muting of CRS in one or more TPs) for one or more tasks as described with few examples:
- If positioning node has the information about the muting of the first reference signal of the first type (e.g. CRS) in one or more TPs in a shared cell, sending, e.g. by the positioning node, this information fully or partly (e.g. only TP ID of TP that mutes CRS) to the UE. For example when sending the assistance information or positioning request then the positioning node may also include IDs of TPs where the first reference signal of the first type (e.g. CRS) is muted.
- Indicating, in particular explicitly indicating, e.g. by the positioning node, to the UE that the UE for determining its own location (e.g. based on UE based positioning method) should not consider the TPs (e.g. TP with ID # 3) which mute certain type of RS signals which are common in all TPs in the shared cell (e.g. CRS, PRS etc.).
- Using may include not taking into account, e.g. by the positioning node, when determining the location of the UE or wireless device based on one or more positioning measurements performed by the UE and/or TPs in a shared cell, the TPs that mute certain type of RS signals which are common in all TPs in the shared cell. For example, assume that the network node (e.g. serving eNB) informs the positioning node that TP3 in a shared cell does not transmit CRS. The positioning node also receives from the UE the measurement results for CSI-RSRP performed by UE on TP1, TP2, TP3 and TP4. The positioning node also receives from the UE the UE Rx-Tx time difference measurement performed on signals transmitted by the UE (e.g. SRS) in the shared cell and on signals (e.g. CRS) received from the shared cell at the UE. Assume that the received CSI-RSRP values for TP1, TP2, TP3 and TP4 are -80 dBm, -75 dBm, -70 dBm and -90 dBm respectively. The maximum CSI-RSRP is -70 dBm corresponding to TP3. The positioning node uses the obtained information about the muting of the first reference signal of the first type (e.g. CRS) in TP3 to determine that the closest or strongest TP is TP2 and not TP3 i.e. TP corresponding to the second strongest CSI-RSRP. The positioning node is able to implicitly determine that the UE has performed the UE Rx-Tx time difference measurement on CRS signals received from TP2 and not TP3 in this example. The positioning node therefore determines the location of the UE using UE Rx-Tx time difference measurement while assuming that the closest TP of the UE is TP2 i.e. the second strongest TP based on CSI-RS.

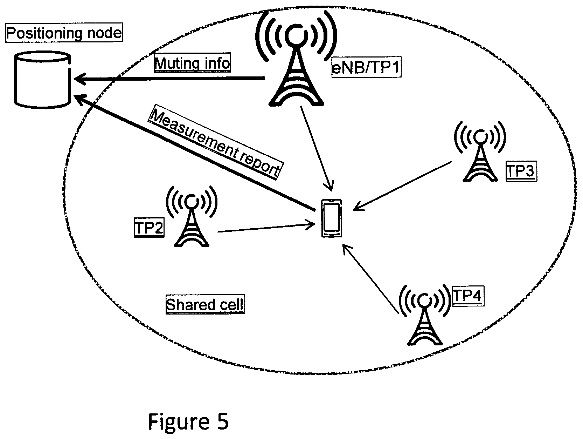

Figure 5 shows an example of a shared cell with 4 TPs (one of them an eNB), where the eNB sends muting pattern information to the positioning node, and the UE sends measurements to the positioning node.

Generally, in a shared cell where all TPs have the same PCI and where one or more TP don't transmit CRS:
- the information about CRS muting in the TP(s) may be taken into account by the UE and/or by the network node when using the following positioning measurements for determining the UE location in order to determine the TP which is closest to the UE:
   ∘ UE timing measurements involving measurement on CRS e.g. UE Rx-Tx time difference measurement etc.
   ∘ Network node timing measurements involving measurement on UE transmitted signals such as SRS e.g. network node Rx-Tx time difference measurement, TA etc.

Independent or in addition/as an implementation of the above, there may be considered the following.

A shared-cell scenario is one of the scenarios studied within the positioning enhancements SI. Herein, some issues related to such type of deployment are addressed.

A shared cell is a type of DL CoMP where multiple geographically separated transmission points (TPs) dynamically coordinate their transmission towards the UE. The unique feature of shared cell is that all transmission points within the shared cell have the same physical cell ID (PCI) which may cause problems for positioning due to identical common signal sequences (e.g., CRS or PRS) transmitted from different TPs within the same shared cell.

Each TP may also be configured to transmit TP-specific CSI-RS signals. The latter makes it possible to uniquely associate the UE measurement and the TP from which the measured signal was transmitted. However, positioning measurements based on CSI-RS have some disadvantages, e.g.:
- The UE-supported conditions for CSI-RS measurements and CRS measurements may be very different (e.g., the requirements for small cell enhancements are specified for CSI-RS Es/lot ≥ 0 dB and CRS Es/lot ≥ -6 dB), which may result in that the UE will be seeing fewer TPs if measuring CSI-RS than as it was measuring CRS,
- The low density of CSI-RS REs may lead to worse measurement performance compared to CRS,
- Enabling in UE the support of CSI-RS measurements for positioning has a significant impact on protocols, UE requirements, and specifications (of most RAN groups, including RAN1, RAN2, RAN3, and RAN4).

Therefore, using common signals for positioning measurements is preferable over using CSI-RS. Furthermore, positioning measurements (e.g., timing measurements) are already defined for some common signals but not for CSI-RS.

However, it is possible that some common signals (e.g., CRS or PRS) may be muted in one or more TPs of a shared cell at some time instances, e.g., for interference coordination purpose. For example the REs for antenna ports 0 and 1 have zero transmission power in one of the TPs in the UE performance requirements defined for shared cell; see sections 8.3.1.3.1 and 8.3.2.4, TS 36.101, Rel-11. At the same time, the UE and positioning node may be not aware of the muted signals and the time instances when the muting occurs, which may result in incorrect measurements or incorrect measurement interpretation, both inducing an error in calculation of UE location.

To address the issue above, the following approaches for positioning (e.g., E-CID or OTDOA) enhancements in shared cells are presented:
Approach 1: Positioning measurements are performed on common signals (e.g., CRS or PRS; a common signal in the context of this specification may generally be common to the shared cell) only, muting is used to differentiate among TPs of the same shared cell. It may be ensured that the UE and positioning node are aware of whether/when muting of common signals is applied in at least one TPs of a shared cell.
Approach 2: Positioning (e.g., timing-based) measurements are performed on common signals (e.g., CRS or PRS), but other signal measurements are used to associate the measurement with the TP. Ensure that the UE and positioning node are aware of whether/when muting of common signals is applied in at least one TPs of a shared cell.

Some examples of the other signal measurements comprise:
an UL measurement or an UL component of a bidirectional measurement (e.g., UL component of Rx-Tx which may be based on UE's SRS transmission) and/or CSI-RS measurements (e.g., CSI-RSRP).

Alternatively or additionally to the above, there may be considered the following. At least for E-CID, there may be considered, e.g. for positioning enhancements, the scenario where:
timing measurements for positioning purpose are performed on common signals (e.g., CRS);
other signal measurements (e.g., UL measurement or measurement component; CSI-RSRP) may be used to associated the timing measurements with the correct TP; it is ensured that the UE and positioning node are aware of whether/when muting of common signals is applied in at least one TPs of a shared cell. This may be achieved by corresponding signaling, e.g. configuring the UE accordingly.

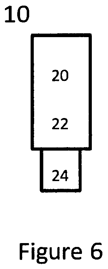

Figure 6 schematically shows a user equipment 10 as an example of a wireless device. User equipment 10 comprises control circuitry 20, which may comprise a controller connected to a memory. Any module of a user equipment may implemented in and/or executable by, user equipment, in particular the control circuitry 20. User equipment 10 also comprises radio circuitry 22 providing receiving and transmitting or transceiving functionality, the radio circuitry 22 connected or connectable to the control circuitry. An antenna circuitry 24 of the user equipment 10 is connected or connectable to the radio circuitry 22 to collect or send and/or amplify signals. Radio circuitry 22 and the control circuitry 20 controlling it are configured for cellular communication and/or D2D communication, in particular utilizing E-UTRAN/LTE resources as described herein. The user equipment 10 may be adapted to carry out any of the methods for operating a radio node or terminal disclosed herein; in particular, it may comprise corresponding circuitry, e.g. control circuitry.

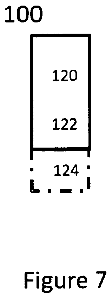

Figure 7 schematically show a network node or base station 100 as an example of a radio node, which in particular may be an eNodeB. Network node 100 comprises control circuitry 120, which may comprise a controller connected to a memory. Any module of a network node, e.g. a receiving module and/or transmitting module and/or control or processing module and/or scheduling module, may be implemented in and/or executable by the network node, in particular the control circuitry 120. The control circuitry 120 is connected to control radio circuitry 122 of the network node 100, which provides receiver and transmitter and/or transceiver functionality. An antenna circuitry 124 may be connected or connectable to radio circuitry 122 for signal reception or transmittance and/or amplification. The network node 100 may be adapted to carry out any of the methods for operating a network node disclosed herein; in particular, it may comprise corresponding circuitry, e.g. control circuitry.

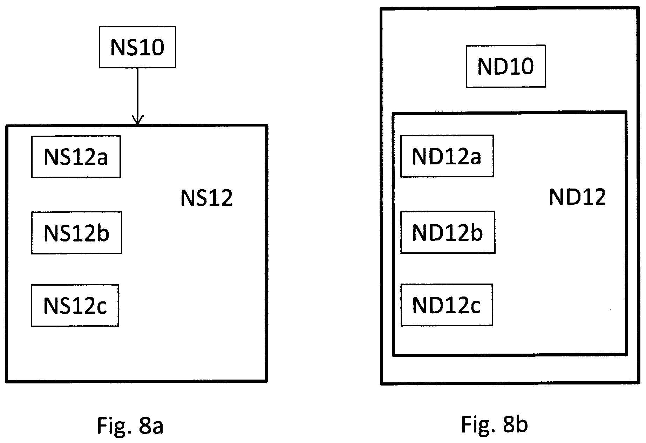

Figure 8a shows a flowchart of an exemplary method for operating a network node in a shared cell with at least two transmission points, which may be a method and/or a network node as described herein. The method comprises an action NS10 of obtaining information that at least one transmission point in the shared cell mutes cell-specific reference signal transmission. The method also comprises an action NS12 of using the obtained information for one or more of the following actions: NS12a of transmitting the obtained information to a positioning node and/or to a user equipment, and/or NS12b of determining, using the obtained information, the transmission point on which a user equipment performs or has performed a timing measurement that involves measurement on CRS; and/or NS12c of determining, using the obtained information, a transmission point to be considered by the network node for performing a timing measurement that involves measurement on signals transmitted by a user equipment.

Figure 8b shows an exemplary network node, which may be a network node as described herein. The network node may comprise a module ND10 for performing action NS10. The network node may also comprise a module ND12 for performing action NS12. Module ND12 and/or the network node may comprise a module ND12a for performing action NS12 and/or a module ND12b for performing action NS12b and/or a module ND12c for performing action NS12c.

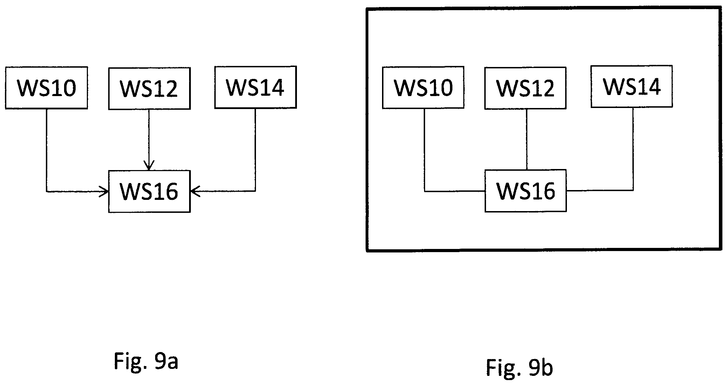

Figure 9a shows a flowchart of an exemplary method for operating a user equipment served by a network node in a shared cell with two or more transmission points. The user equipment and/or the network node may be as described herein. The method comprises an action WS10 of obtaining information that at least one transmission point in the shared cell mutes cell-specific reference signal transmission. The method also comprises an action WS12 of performing at least a first measuring, wherein the first measuring involves one or more measurements on CRS signals. Moreover, the method comprises an action WS14 of performing at least a second measuring on two or more transmission points in the shared cell, wherein the second measuring involves one or more than one measurements on at least a reference signal unique for each transmission point. In addition, the method comprises an action WS16 of using the following information to determine on which transmission point the first measuring has actually been or is being performed by the UE: the obtained information on CRS muting in one or more transmission points, the performed first measuring, and the performed second measuring.

Figure 9b shows exemplary user equipment, which may be a user equipment as disclosed herein. The user equipment comprises a module WD10 for performing action WS10. Moreover, the user equipment comprises a module WD12 for performing action WD12, as well as a module WD14 for performing action WS14. In addition, the user equipment comprises a module WD16 for performing action WS16.

Generally, the wireless device or UE may generally be a wireless device or UE for and/or of a wireless communication network, in particular a cellular network and/or according to LTE. The wireless device may be adapted for operation in a shared cell. A method for operating a wireless device may be for operating the wireless device in a shared cell.

The network node may generally be a network node for and/or of a wireless communication network, in particular a cellular network and/or according to LTE, e.g. a radio network node and/or eNodeB. The network node (in particular a radio network node) may be adapted for operation in a shared cell. A method for operating a network node (in particular a radio network node) may be for operating the wireless device in a shared cell.

The positioning node may generally be a positioning node for and/or of a wireless communication network, in particular a cellular network and/or according to LTE, e.g. a non-radio network node and/or a coordinating node coordinating and/or being connected to one or more eNodeBs or radio network nodes, which may be eNodeBs or radio network nodes as described herein.

There is disclosed a program product comprising code executable by control circuitry, the code causing the control circuitry to perform and/or control at least any one of the methods for operating a wireless device or UE or a network node described herein.

Moreover, there may be considered a carrier medium carrying and/or storing at least any of the program products described herein and/or code executable by control circuitry, the code causing the control circuitry to perform and/or control at least any one of the methods for operating a D2D device or UE or a network node described herein. Generally, a carrier medium may be accessible and/or readable and/or receivable by control circuitry. Storing data and/or a program product and/or code may be seen as part of carrying data and/or a program product and/or code. A carrier medium generally may comprise a guiding/transporting medium and/or a storage medium. A guiding/transporting medium may be adapted to carry and/or carry and/or store signals, in particular electromagnetic signals and/or electrical signals and/or magnetic signals and/or optical signals. A carrier medium, in particular a guiding/transporting medium, may be adapted to guide such signals to carry them. A carrier medium, in particular a guiding/transporting medium, may comprise the electromagnetic field, e.g. radio waves or microwaves, and/or optically transmissive material, e.g. glass fiber, and/or cable. A storage medium may comprise at least one of a memory, which may be volatile or non-volatile, a buffer, a cache, an optical disc, magnetic memory, flash memory, etc.

Generally, there may be considered a wireless device or UE adapted to perform any one of the methods for operating a wireless device or UE described herein.

Additionally or alternatively, there may generally be considered a network node, in particular a controlling node or eNodeB, adapted to perform any one of the methods for operating a network node, like a controlling node or eNodeB, described herein.

A network node may generally be implemented as a controlling node and/or a base station or eNodeB.

In the context of this description, wireless communication may be communication, in particular transmission and/or reception of data, via electromagnetic waves and/or an air interface, in particular radio waves, e.g. in a wireless communication network and/or utilizing a radio access technology (RAT). The communication may be between nodes of a wireless communication network and/or in a wireless communication network. It may be envisioned that a node in or for communication, and/or in, of or for a wireless communication network is adapted for, and/or for communication utilizing, one or more RATs, in particular LTE/E-UTRA.

A communication may generally involve transmitting and/or receiving messages, in particular in the form of packet data. A message or packet may comprise control and/or configuration data and/or payload data and/or represent and/or comprise a batch of physical layer transmissions. Control and/or configuration data may refer to data pertaining to the process of communication and/or nodes of the communication. It may, e.g., include address data referring to a node of the communication and/or data pertaining to the transmission mode and/or spectral configuration and/or frequency and/or coding and/or timing and/or bandwidth as data pertaining to the process of communication or transmission, e.g. in a header. Each node involved in such communication may comprise radio circuitry and/or control circuitry and/or antenna circuitry, which may be arranged to utilize and/or implement one or more than one radio access technologies.

Radio circuitry of a node may generally be adapted for the transmission and/or reception of radio waves, and in particular may comprise a corresponding transmitter and/or receiver and/or transceiver, which may be connected or connectable to antenna circuitry and/or control circuitry. Control circuitry of a node may comprise a controller and/or memory arranged to be accessible for the controller for read and/or write access. The controller may be arranged to control the communication and/or the radio circuitry and/or provide additional services.

Circuitry of a node, in particular control circuitry, e.g. a controller, may be programmed to provide the functionality described herein. A corresponding program code may be stored in an associated memory and/or storage medium and/or be hardwired and/or provided as firmware and/or software and/or in hardware. A controller may generally comprise a processor and/or microprocessor and/or microcontroller and/or FPGA (Field-Programmable Gate Array) device and/or ASIC (Application Specific Integrated Circuit) device. More specifically, it may be considered that control circuitry comprises and/or may be connected or connectable to memory, which may be adapted to be accessible for reading and/or writing by the controller and/or control circuitry. Radio access technology may generally comprise, e.g., Bluetooth and/or Wifi and/or WIMAX and/or cdma2000 and/or GERAN and/or UTRAN and/or in particular E-Utran and/or LTE. A communication may in particular comprise a physical layer (PHY) transmission and/or reception, onto which logical channels and/or logical transmission and/or receptions may be imprinted or layered.

A node of a wireless communication network may be implemented as a Wireless device and/or user equipment and/or base station and/or relay node and/or any device generally adapted for device-to-device communication.

A wireless communication network may comprise at least one of a device configured for device-to-device communication, a wireless device, and/or a user equipment and/or base station and/or relay node, in particular at least one user equipment, which may be arranged for device-to-device communication with a second wireless device or node of the wireless communication network, in particular with a second user equipment. A node of or for a wireless communication network may generally be a wireless device configured for wireless device-to-device communication, in particular using the frequency spectrum of a cellular and/or wireless communications network, and/or frequency and/or time resources of such a network. Device-to-device communication may optionally include broadcast and/or multicast communication to a plurality of devices or nodes. A cellular network may comprise a network node, in particular a radio network node, which may be connected or connectable to a core network, e.g. a core network with an evolved network core, e.g. according to LTE.

The connection between the network node and the core network/network core may be at least partly based on a cable/landline connection. Operation and/or communication and/or exchange of signals involving part of the core network, in particular layers above a base station or eNB, and/or via a predefined cell structure provided by a base station or eNB, may be considered to be of cellular nature or be called cellular operation. Operation and/or communication and/or exchange of signals without involvement of layers above a base station and/or without utilizing a predefined cell structure provided by a base station or eNB, may be considered to be D2D communication or operation, in particular, if it utilises the radio resources, in particular carriers and/or frequencies, and/or equipment (e.g. circuitry like radio circuitry and/or antenna circuitry, in particular transmitter and/or receiver and/or transceiver) provided and/or used for cellular operation.

A wireless device or user equipment (UE) may generally be a device configured for wireless device-to-device communication (it may be a wireless device) and/or a terminal for a wireless and/or cellular network, in particular a mobile terminal, for example a mobile phone, smart phone, tablet, PDA, etc. A user equipment may be a node of or for a wireless communication network as described herein, in particular a wireless device. It may be envisioned that a wireless device user equipment or wireless device is adapted for one or more RATs, in particular LTE/E-UTRA. A user equipment or wireless device may generally be proximity services (ProSe) enabled, which may mean it is D2D capable or enabled. It may be considered that a user equipment or wireless device comprises radio circuitry and/control circuitry for wireless communication. Radio circuitry may comprise for example a receiver device and/or transmitter device and/or transceiver device. Control circuitry may include a controller, which may comprise a microprocessor and/or microcontroller and/or FPGA (Field-Programmable Gate Array) device and/or ASIC (Application Specific Integrated Circuit) device. It may be considered that control circuitry comprises or may be connected or connectable to memory, which may be adapted to be accessible for reading and/or writing by the controller and/or control circuitry. A node or device of or for a wireless communication network, in particular a node or device for device-to-device communication, may generally be a user equipment or wireless device. It may be considered that a user equipment is configured to be a user equipment adapted for LTE/E-UTRAN.

A network node may be a base station, which may be any kind of base station of a wireless and/or cellular network adapted to serve one or more wireless device or user equipments. It may be considered that a base station is a node of a wireless communication network. A base station may be adapted to provide and/or define one or more cells of the network and/or to allocate or schedule frequency and/or time resources for communication to one or more nodes of a network, in particular UL resources, for example for device-to-device communication, which may be communication between devices different from the base station. Generally, any node adapted to provide such functionality may be considered a base station. It may be considered that a base station or more generally a network node, in particular a radio network node, comprises radio circuitry and/or control circuitry for wireless communication. It may be envisioned that a base station or network node is adapted for one or more RATs, in particular LTE/E-UTRA . Radio circuitry may comprise for example a receiver device and/or transmitter device and/or transceiver device. Control circuitry may include a controller, which may comprise a microprocessor and/or microcontroller and/or FPGA (Field-Programmable Gate Array) device and/or ASIC (Application Specific Integrated Circuit) device. It may be considered that control circuitry comprises or may be connected or connectable to memory, which may be adapted to be accessible for reading and/or writing by the controller and/or control circuitry. A base station may be arranged to be a node of a wireless communication network, in particular configured for and/or to enable and/or to facilitate and/or to participate in device-to-device communication, e.g. as a device directly involved or as an auxiliary and/or coordinating node. Generally, a base station may be arranged to communicate with a core network and/or to provide services and/or control to one or more user equipments and/or to relay and/or transport communications and/or data between one or more user equipments and a core network and/or another base station and/or be Proximity Service enabled. An eNodeB (eNB) may be envisioned as an example of a base station, in particular according to LTE. A base station may generally be proximity service enabled and/or to provide corresponding services. It may be considered that a base station is configured as or connected or connectable to an Evolved Packet Core (EPC) and/or to provide and/or connect to corresponding functionality. The functionality and/or multiple different functions of a base station may be distributed over one or more different devices and/or physical locations and/or nodes. A base station may be considered to be a node of a wireless communication network. Generally, a base station may be considered to be configured to be a controlling node and/or to allocate resources in particular for device-to-device communication between two nodes of a wireless communication network, in particular two user equipments.

A storage medium may be adapted to store data and/or store instructions executable by control circuitry and/or a computing device, the instruction causing the control circuitry and/or computing device to carry out and/or control any one of the methods described herein when executed by the control circuitry and/or computing device. A storage medium may generally be computer-readable, e.g. an optical disc and/or magnetic memory and/or a volatile or non-volatile memory and/or flash memory and/or RAM and/or ROM and/or EPROM and/or EEPROM and/or buffer memory and/or cache memory and/or a database.

Resources or communication resources may generally be frequency and/or time resources. Allocated or scheduled resources may comprise and/or refer to frequency-related information, in particular regarding one or more carriers and/or bandwidth and/or subcarriers and/or time-related information, in particular regarding frames and/or slots and/or subframes, and/or regarding resource blocks and/or time/frequency hopping information. Allocated resources may in particular refer to UL resources, e.g. UL resources for a first wireless device to transmit to and/or for a second wireless device. Transmitting on allocated resources and/or utilizing allocated resources may comprise transmitting data on the resources allocated, e.g. on the frequency and/or subcarrier and/or carrier and/or timeslots or subframes indicated. It may generally be considered that allocated resources may be released and/or de-allocated. A network or a node of a network, e.g. an allocation node, may be adapted to determine and/or transmit corresponding allocation data indicating release or de-allocation of resources to one or more wireless devices, in particular to a first wireless device. Accordingly, D2D resource allocation may be performed by the network and/or by a node, in particular a node within and/or within a cell of a cellular network covering the wireless devices participating or intending to participate in the D2D communication.

Allocation data may be considered to be data indicating and/or granting resources allocated by the controlling or allocation node, in particular data identifying or indicating which resources are reserved or allocated for D2D communication for a wireless device and/or which resources a wireless device may use for D2D communication and/or data indicating a resource grant or release. A grant or resource grant may be considered to be one example of allocation data. It may be considered that an allocation node is adapted to transmit allocation data directly to a node and/or indirectly, e.g. via a relay node and/or another node or base station. Allocation data may comprise control data and/or be part of or form a message, in particular according to a pre-defined format, for example a DCI format, which may be defined in a standard, e.g. LTE.

A wireless device or wireless device may for example be comprised in or comprise a cellular UE, PDA, a wireless device, laptop, mobile, sensor, relay, D2D relay, a small base station employing a UE-like interface, etc. A wireless device may generally be adapted for cellular operation and/or communication in a wireless communication network. It may be considered that a wireless device generally comprises radio circuitry and/or control circuitry for wireless communication, in particular D2D operation or communication and/or cellular operation or communication.

A wireless device may comprise a software/program arrangement arranged to be executable by a hardware device, e.g. control circuitry, and/or storable in a memory of e.g. a UE or terminal, which may provide control functionality to perform any of the method for operating a wireless device described herein and/or cellular operation of the wireless device.

Cellular operation (in particular by a wireless device or UE) may comprise any action or activity related to a cellular network (any one or more RATs). Some examples of cellular operation may be a radio signal transmission, a radio signal reception, performing a radio measurement, performing a mobility operation or RRM related to a cellular network.

A network node may be a controlling node connected or connectable to a wireless device for cellular and/or D2D communication. A controlling node may be defined by its functionality of configuring the wireless device, in particular in regards to measuring and/or reporting data pertaining to D2D operation. A controlling node may be a network node that is adapted to schedule, decide and/or select and/or allocate, at least in part, time-frequency resources to be used for at least one of: cellular communication or transmissions and D2D communication or transmissions. The controlling node may also provide scheduling information to another node, such as another wireless device, a cluster head, a radio network node such as eNodeB, or a network node (e.g. a core network node), MME, positioning node, D2D server, RNC, SON, etc.).

The network node or controlling node may be adapted to communicate or communicate with a radio network node. It may be envisioned that a controlling node may also perform coordination and/or control for one or more wireless device or UEs. The coordination and/or control may be performed in a centralized or distributed manner. A controlling node may be referred to as an allocating node and/or a coordinating node.

A network device or node and/or a wireless device may be or comprise a software/program arrangement arranged to be executable by a hardware device, e.g. control circuitry, and/or storable in a memory, which may provide control functionality to control any of the methods for operating a network node or positioning node described herein.

A cellular network or mobile or wireless communication network may comprise e.g. an LTE network (FDD or TDD), UTRA network, CDMA network, WiMAX, GSM network, any network employing any one or more radio access technologies (RATs) for cellular operation. The description herein is given for LTE, but it is not limited to the LTE RAT.

RAT (radio access technology) may generally include: e.g. LTE FDD, LTE TDD, GSM, CDMA, WCDMA, WiFi, WLAN, WiMAX, etc.

A network node may generally be a radio network node (which may be adapted for wireless or radio communication, e.g. with a wireless device or a UE) or another network node. A network node generally may be a controlling node. Some examples of a radio network node or controlling node are a radio base station, in particular an eNodeB, a relay node, an access point, a cluster head, RNC, etc. The radio network node may be comprised in a mobile communication network and may support and/or be adapted for cellular operation or communication and/or D2D operation or communication.

A network node, in particular a radio network node, may comprise radio circuitry and/or control circuitry, in particular for wireless communication. Some examples of a network node, which is not a radio network node, may comprise: a core network node, MME, a node controlling at least in part mobility of a wireless device, SON node, O&M node, positioning node, a server, an application server, a D2D server (which may be capable of some but not all D2D-related features), a node comprising a ProSe function, a ProSe server, an external node, or a node comprised in another network. Any network node may comprise control circuitry and/or a memory.

A network node or serving TP may be considered to be serving a wireless device or UE, if it provides a cell of a cellular network to the served node or wireless device or UE and/or is connected or connectable to the wireless device or UE via and/or for transmission and/or reception and/or UL and/or DL data exchange or transmission and/or if the network node is adapted to provide the wireless device or UE with allocation and/or configuration data and/or a measurement performance characteristic and/or to configure the wireless device or UE.

A wireless device may generally be a node or device adapted to perform D2D communication, in particular transmission and/or reception, and/or at least one type of D2D operations. In particular, a wireless device may be a terminal and/or user equipment and/or D2D enabled machine and/or sensor. The wireless device may be adapted to transmit and/or receive D2D data based on allocation data, in particular on and/or utilizing resources indicate in the allocation data. D2D communication and/or transmission by a wireless device may generally be in UL resources and/or corresponding carrier or frequency and/or modulation. A wireless device (such as a UE) may be adapted for and/or capable of CA or CA operation. In particular, it may be adapted to transmit and/or receive one or more than one CCs and/or utilising, and/or participating in, carrier aggregation.

A wireless device may be adapted to configure itself and/or be configured according to configuration data, which may include setting up and/or scheduling resources and/or equipment for receiving and/or transmitting and/or sharing of resources and/or in particular D2D operation and/or cellular operation based on the configuration data. Configuration data may be received, by the wireless device, from another node or wireless device, in particular a network node.

A network node may generally be adapted to provide and/or determine and/or transmit configuration data, in particular to a wireless device. Configuration data may be considered to be a form of allocation data and/or may be provided in the form of a message and/or data packet/s. Configuring a wireless device or UE, e.g. configuring of the node by a network node, may include determining and/or transmitting configuration data to the node to be configured, i.e. the wireless device or UE. Determining the configuration data and transmitting this data to a wireless device or UE may be performed by different nodes, which may be arranged such that they may communicate and/or transport the configuration data between each other, in particular such that the node determining or adapted to determine the configuration data may transmit the configuration data to the node transmitting it or adapted to transmit it; the latter node may be adapted to receive the configuration data and/or relay and/or provide a message bases on the configuration data, e.g. by reformatting and/or amending and/or updating data received.

Cellular DL operation and/or communication of a wireless device or UE may refer to receiving transmissions in DL, in particular in cellular operation and/or from a network node/eNB/base station. Cellular UL operation of a wireless device or UE may refer to UL transmissions, in particular in cellular operation, e.g. transmitting to a network or network node/eNB/base station.

A reference signal unique to a transmission point may be a signal which may be (uniquely) associated to the transmission point transmitting it, e.g. due to the utilized resources and/or a pattern of resources, and/or modulation and/or coding and/or an identifier or other identification, or any indication of the identity of the transmission point transmitting the signal. Unique in this context may refer to unique within and/or pertaining to the shared cell or a group of cells including the shared cell, in particular a group including neighboring cells, or two or more layers of neighboring cells (e.g., the neighbors of neighbors of the shared cell for a two-layered group). A common reference signal may be a signal transmitted within the shared cell by more than one or all transmission points of the shared cell and/or without being uniquely associated to a specific transmission point. It may be considered that a common signal is transmitted by one transmission point only, without an indication of the identity of the transmission point, and that another transmission point transmits the same signal at a different point in time).

Each or any one of the wireless devices or user equipments shown in the figures may be adapted to perform the methods to be carried out by a user equipment or wireless device described herein. Alternatively or additionally, each or any of the wireless devices or user equipments shown in the figures may comprise any one or any combination of the features of a user equipment or wireless device described herein.

Each or any one of the network nodes or controlling nodes or eNBs or base stations shown in the figures may be adapted to perform the methods to be carried out by network node or base station described herein. Alternatively or additionally, the each or any one of the controlling or network nodes or eNBs or base stations shown in the figures may comprise any one or any one combination of the features of a network node or eNB or base station described herein.

A measuring or measurement may generally refer to the process of measuring and/or performing measurements, and/or, depending on context, may also refer to the result of such measuring or measurement and/or information representing such a result, e.g. measurement data and/or a representation of measurement data.

In this description, for purposes of explanation and not limitation, specific details are set forth (such as particular network functions, processes and signaling steps) in order to provide a thorough understanding of the technique presented herein. It will be apparent to one skilled in the art that the present concepts and aspects may be practiced in other variants and variants that depart from these specific details.

For example, the concepts and variants are partially described in the context of Long Term Evolution (LTE) or LTE-Advanced (LTE-A) mobile or wireless communications technologies; however, this does not rule out the use of the present concepts and aspects in connection with additional or alternative mobile communication technologies such as the Global System for Mobile Communications (GSM). While the following variants will partially be described with respect to certain Technical Specifications (TSs) of the Third Generation Partnership Project (3GPP), it will be appreciated that the present concepts and aspects could also be realized in connection with different Performance Management (PM) specifications.

Moreover, those skilled in the art will appreciate that the services, functions and steps explained herein may be implemented using software functioning in conjunction with a programmed microprocessor, or using an Application Specific Integrated Circuit (ASIC), a Digital Signal Processor (DSP), a Field Programmable Gate Array (FPGA) or general purpose computer. It will also be appreciated that while the variants described herein are elucidated in the context of methods and devices, the concepts and aspects presented herein may also be embodied in a program product as well as in a system comprising control circuitry, e.g. a computer processor and a memory coupled to the processor, wherein the memory is encoded with one or more programs or program products that execute the services, functions and steps disclosed herein.

It is believed that the advantages of the aspects and variants presented herein will be fully understood from the foregoing description, and it will be apparent that various changes may be made in the form, constructions and arrangement of the exemplary aspects. The aspects presented herein can be varied in many ways, it will be recognized that any scope of protection should be defined by the scope of the claims that follow without being limited by the description.

| Abbreviation | Explanation |
|---|---|
| BS | Base Station |
| CID | Cell Identity |
| CoMP | Coordinated Multiple Point Transmission and Reception |
| CRS | Cell-specific Reference Signal |
| CSI | Channel State Information |
| CSI-RS | CSI reference signal |
| DAS | Distributed Antenna System |
| DL | Downlink |
| E-CID | Enhanced cell ID |
| elCIC | Enhanced Inter-Cell Interference Coordination |
| E-SMLC | evolved SMLC |
| ICIC | Inter-Cell Interference Coordination |
| ID | Identity |
| L1 | Layer 1 |
| L2 | Layer 2 |
| LTE | Long Term Evolution |
| MAC | Medium Access Control |
| OCC | Orthogonal Cover Code |
| OFDM | Orthogonal Frequency Division Multiplexing |
| PBCH | Physical Broadcast Channel |
| PCFICH | Physical Control format Indicator |
| PDCCH | Physical Downlink Control Channel |
| PDSCH | Physical Downlink Shared Channel |
| PHICH | Physical Hybrid ARQ Indicator Channel |
| PSS | Primary Synchronization Signal |
| RAT | Radio Access Technology |
| RE | Resource Element |
| RB | Resource Block |
| RRH | Remote radio head |
| RRM | Radio Resource Management |
| RRU | Remote radio unit |
| RSRQ | Reference signal received quality |
| RSRP | Reference signal received power |
| SFN | Single Frequency Network |
| SRS | Sounding Reference Signal |
| SSS | Secondary Synchronization Signal |
| TP | Transmission point |
| UE | User Equipment |
| UL | Uplink |
| RSTD | Reference signal time difference |
| SMLC | Serving Mobile Location Center |
| SON | Self Organizing Network |
| RSSI | Received signal strength indicator |
| O&M | Operational and Maintenance |
| OSS | Operational Support Systems |
| OTDOA | Observed time difference of arrival |
| 3GPP | 3^{rd} Generation Partnership Project |
| Ack/Nack | Acknowledgment/Non-Acknowledgement, also A/N |
| ADC | Analog-to-digital conversion |
| AGC | Automatic gain control |
| ANR | Automatic neighbor relations |
| AP | Access point |
| BCH | Broadcast channel |
| BER/BLER | Bit Error Rate, BLock Error Rate; |
| BS | Base Station |
| BSC | Base station controller |
| BTS | Base transceiver station |
| CA | Carrier aggregation |
| CC | Component carrier |
| CG | Cell group |
| CGI | Cell global identity |
| CP | Cyclic prefix |
| CoMP | Coordinated Multiple Point Transmission and Reception |
| CPICH | Common pilot channel |
| CQI | Channel Quality Information |
| CRS | Cell-specific Reference Signal |
| CSG | Closed subscriber group |
| CSI | Channel State Information |
| CSI-RS | CSI reference signal |
| D2D | Device-to-device |
| D2D UE | UE adapted for D2D (in particular, a UE adapted for both cellular and D2D operation) |
| DAS | Distributed antenna system |
| DC | Dual connectivity |
| DFT | Discrete Fourier Transform |
| DL | Downlink; generally referring to transmission of data to a node/into a direction further away from network core (physically and/or logically); in particular from a base station or eNodeB to a D2D device or UE; often uses specified spectrum/bandwidth different from UL (e.g. LTE) |
| DL-SCH | Downlink shared channel |
| DRX | Discontinuous reception |
| EARFCN | Evolved absolute radio frequency channel number |
| ECGI | Evolved CGI |
| eNB | evolved NodeB; a form of base station, also called eNodeB |
| EPDCCH | Enhanced Physical DL Control CHannel |
| E-UTRA/N | Evolved UMTS Terrestrial Radio Access/Network, an example of a RAT |
| f1, f2, f3,...,fn | carriers/carrier frequencies; different numbers may indicate that the referenced carriers/frequencies are different |
| f1_UL,..., fn_UL | Carrier for Uplink/in Uplink frequency or band |
| f1_DL,... ,fn_DL | Carrier for Downlink/in Downlink frequency or band |
| FDD | Frequency division duplex |
| FFT | Fast Fourier transform |
| HD-FDD | Half duplex FDD |
| HO | Handover |
| ID | Identity |
| L1 | Layer 1 |
| L2 | Layer 2 |
| LTE | Long Term Evolution, a telecommunications or wireless or mobile communication standard |
| M2M | machine to machine |
| MAC | Medium Access Control |
| MBSFN | Multiple Broadcast Single Frequency Network |
| MCG | Master cell group |
| MDT | Minimisation of Drive Test |
| MeNB | Master eNodeB |
| MME | Mobility management entity |
| MPC | Measurement Performance Characteristic |
| MRTD | Maximum receive timing difference |
| MSR | Multi-standard radio |
| MTC | Machine Type Communications |
| NW | Network |
| OFDM | Orthogonal Frequency Division Multiplexing |
| O&M | Operational and Maintenance |
| OSS | Operational Support Systems |
| PC | Power Control |
| PCC | Primary component carrier |
| PCI | Physical cell identity |
| PCell | Primary Cell |
| PCG | Primary Cell Group |
| PCH | Paging channel |
| PDCCH | Physical DL Control CHannel |
| PDU | Protocol data unit |
| PGW | Packet gateway |
| PH | Power Headroom |
| PHICH | Physical HARQ indication channel |
| PHR | Power Headroom Report |
| PLMN | Public land mobile network |
| PSCell | Primary SCell |
| PSC | Primary serving cell |
| PSS | Primary synchronization signal |
| PUSCH | Physical Uplink Shared CHannel |
| RA | Random Access |
| RACH | Random Access CHannel |
| RAT | Radio Access Technology |
| RB | Resource Block |
| RE | Resource Element |
| RF | Radio frequency |
| RLM | Radio link monitoring |
| RNC | Radio Network Controller |
| RRC | Radio resource control |
| RRH | Remote radio head |
| RRM | Radio Resource Management |
| RRU | Remote radio unit |
| RSCP | Received signal code power |
| RSRQ | Reference signal received quality |
| RSRP | Reference signal received power |
| RSSI | Received signal strength indicator |
| RSTD | Reference signal time difference |
| RX | reception/receiver, reception-related |
| SCC | Secondary component carrier |
| SA | Scheduling Assignment |
| SCell | Secondary Cell |
| SCG | Secondary Cell Group |
| SeNB | Secondary eNodeB |
| SFN | System frame number; or |
| SFN | Single Frequency Network |
| SGW | Signaling gateway |
| SI | System Information |
| SINR/SNR | Signal-to-Noise-and-Interference Ratio; Signal-to-Noise Ratio |
| SON | Self Organizing Network |
| SSC | Secondary serving cell |
| SSS | Secondary Synchronization Signal |
| TA | Timing advance |
| TAG | Timing advance group |
| TDD | Time Division Duplexing |
| TPC | Transmit Power Control |
| TX,Tx,tx | transmission/transmitter, transmission-related |
| UARFCN | UMTS Absolute Radio Frequency Channel Number |
| UE | User Equipment |
| UL | Uplink; generally referring to transmission of data to a node/into a direction closer to a network core (physically and/or logically); in particular from a D2D device or UE to a base station or eNodeB; in the context of D2D, it may refer to the spectrum/bandwidth utilized for transmitting in D2D, which may be the same used for UL communication to a eNB in cellular communication; in some D2D variants, transmission by all devices involved in D2D communication may in some variants generally be in UL spectrum/bandwidth/carrier/frequency |

These and other abbreviations may be used according to LTE standard definitions.

## Claims

1. Method for operating a network node (100) in a shared cell with a number of N transmission points, the method comprising:
- determining which of the N transmission points is closest to a user Equipment, UE, by
- receiving from the UE measurement results of channel state information reference signal, CSI-RSRP, performed by the UE on each of the N transmission points,
- obtaining information that at least one transmission point in the shared cell mutes cell-specific reference signal, CRS, transmission, and
- using the obtained information for:
determining, a position or location of the UE by using the obtained information and the UE measurement results, for determining that a transmission point which is not muted and having highest CSI-RSRP in relation to the other N transmission points is the transmission point closest to the UE.

2. Network node (100) for a wireless communication network, the network node (100) being adapted for operation in a shared cell with a number of N transmission points, the network node (100) further being adapted for determining which of the N transmission points is closest to a user Equipment, UE, by being adapted to receiving from the UE measurement results of channel state information reference signal, CSI-RSRP, performed by the UE on each of the N transmission points and obtaining information that at least one transmission point in the shared cell mutes cell-specific reference signal, CRS, transmission; the network node (100) further being adapted for using the obtained information for:
- determining, a position or location of the UE by using the obtained information and the UE measurement results for determining that a transmission point which is not muted and having highest CSI-RSRP in relation to the other N transmission points is the transmission point closest to the UE.

3. Method for operating a user equipment (10), UE, served by a network node (100) in a shared cell with a number of N transmission points, the method comprising:
- determining which of the N transmission points is closest to the UE by:
- performing of channel state information reference signal, CSI-RSRP, measurements on CSI-RS which is specific to each transmission point;
- obtaining information that at least one transmission point in the shared cell mutes cell-specific reference signal, CRS, transmission;
- determining a position or location of the UE by using the obtained information and the UE measurement results for determining that a transmission point which is not muted and having highest CSI-RSRP in relation to the other N transmission points is the transmission point closest to the UE.

4. User equipment (10), UE, for a wireless communication network, the UE (10) being adapted to be served by a network node in a shared cell a number of N transmission points, the UE (10) being adapted for
- determining which of the N transmission points is closest to the UE by being adapted for
- performing of channel state information reference signal, CSI-RSRP, measurements on CSI-RS which is specific to each transmission point;
- obtaining information that at least one transmission point in the shared cell mutes CRS transmission;
- determining a position or location of the UE by using the obtained information and the UE measurement results for determining that a transmission point which is not muted and having highest CSI-RSRP in relation to the other N transmission points is the transmission point closest to the UE.

5. Program product comprising code executable by control circuitry, the code causing the control circuitry to perform and/or control a method according to claim 1 or 3.

6. Carrier medium carrying and/or storing a program product according to claim 5 and/or code executable by control circuitry, the code causing the control circuitry to perform and/or control a method according to claim 1 or 3

## Patentansprüche

1. Verfahren zum Betreiben eines Netzknotens (100) in einer gemeinsamen Zelle mit einer Anzahl von N Übertragungspunkten, wobei das Verfahren Folgendes umfasst:
- Bestimmen, welcher der N Übertragungspunkte einer Benutzereinrichtung (UE) am nächsten ist, durch
- Empfangen ausgehend von der UE von Messergebnissen eines Referenzsignals der Kanalzustandsinformation (CSI-RSRP), durchgeführt von der UE an jedem der N Übertragungspunkte,
- Erhalten der Information, dass mindestens ein Übertragungspunkt in der gemeinsamen Zelle die Übertragung des zellspezifischen Referenzsignals (CRS) stumm schaltet, und
- Verwenden der erhaltenen Information zum:
Bestimmen einer Position oder eines Standortes der UE unter Verwendung der erhaltenen Information und der UE-Messergebnisse, um zu bestimmen, dass ein Übertragungspunkt, der nicht stumm geschaltet ist und in Bezug zu den anderen N Übertragungspunkten das höchste CSI-RSRP aufweist, der der UE am nächsten liegende Übertragungspunkt ist.

2. Netzknoten (100) für ein drahtloses Kommunikationsnetz, wobei der Netzknoten (100) für den Betrieb in einer gemeinsamen Zelle mit einer Anzahl von N Übertragungspunkten ausgelegt ist, wobei der Netzknoten (100) ferner ausgelegt ist, um zu bestimmen, welcher der N Übertragungspunkte einer Benutzereinrichtung (UE) am nächsten ist, indem er angepasst ist, um von der UE Messergebnisse des Referenzsignals der Kanalzustandsinformation (CSI-RSRP) zu empfangen, das von der UE an jedem der N Übertragungspunkte durchgeführt wird, und um die Information zu erhalten, dass mindestens ein Übertragungspunkt in der gemeinsamen Zelle die Übertragung des zellspezifischen Referenzsignals (CRS) stumm schaltet; wobei der Netzknoten (100) ferner angepasst ist, um die erhaltene Information zu verwenden zum:
- Bestimmen einer Position oder eines Standortes der UE durch Verwendung der erhaltenen Information und der UE-Messergebnisse, um zu bestimmen, dass ein Übertragungspunkt, der nicht stumm geschaltet ist und in Bezug zu den anderen N Übertragungspunkten das höchste CSI-RSRP aufweist, der der UE am nächsten liegende Übertragungspunkt ist.

3. Verfahren zum Betreiben einer Benutzereinrichtung (10) (UE), die von einem Netzknoten (100) in einer gemeinsamen Zelle mit einer Anzahl von N Übertragungspunkten bedient wird, wobei das Verfahren Folgendes umfasst:
- Bestimmen, welcher der N Übertragungspunkte der UE am nächsten ist, durch:
- Durchführen von Messungen des Referenzsignals der Kanalzustandsinformation (CSI-RSRP) am CSI-RS, das für jeden Übertragungspunkt spezifisch ist;
- Erhalten der Information, dass mindestens ein Übertragungspunkt in der gemeinsamen Zelle die Übertragung des zellspezifischen Referenzsignals (CRS) stumm schaltet;
- Bestimmen einer Position oder eines Standortes der UE durch Verwendung der erhaltenen Information und der UE-Messergebnisse, um zu bestimmen, dass ein Übertragungspunkt, der nicht stumm geschaltet ist und in Bezug zu den anderen N Übertragungspunkten das höchste CSI-RSRP aufweist, der der UE am nächsten liegende Übertragungspunkt ist.

4. Benutzereinrichtung (10) (UE) für ein drahtloses Kommunikationsnetz, wobei die UE (10) angepasst ist, um von einem Netzknoten in einer gemeinsamen Zelle mit einer Anzahl von N Übertragungspunkten bedient zu werden, wobei die UE (10) angepasst ist zum
- Bestimmen, welcher der N Übertragungspunkte der UE am nächsten ist, indem es angepasst ist zum
- Durchführen von Messungen des Referenzsignals der Kanalzustandsinformation (CSI-RSRP) am CSI-RS, das für jeden Übertragungspunkt spezifisch ist;
- Erhalten der Information, dass mindestens ein Übertragungspunkt in der gemeinsamen Zelle die Übertragung des CRS stumm schaltet;
- Bestimmen einer Position oder eines Standortes der UE durch Verwendung der erhaltenen Information und der UE-Messergebnisse, um zu bestimmen, dass ein Übertragungspunkt, der nicht stumm geschaltet ist und in Bezug zu den anderen N Übertragungspunkten das höchste CSI-RSRP aufweist, der der UE am nächsten liegende Übertragungspunkt ist.

5. Programmprodukt, umfassend einen durch eine Steuerschaltung ausführbaren Code, wobei der Code die Steuerschaltung veranlasst, ein Verfahren nach Anspruch 1 oder 3 durchzuführen und/oder zu steuern.

6. Trägermedium, das ein Programmprodukt nach Anspruch 5 und/oder einen durch eine Steuerschaltung ausführbaren Code trägt und/oder speichert, wobei der Code die Steuerschaltung veranlasst, ein Verfahren nach Anspruch 1 oder 3 durchzuführen und/oder zu steuern

## Revendications

1. Procédé d'exploitation d'un noeud de réseau (100) dans une cellule partagée avec un nombre de N points de transmission, le procédé comprenant :
- la détermination duquel parmi les N points de transmission est le plus proche d'un équipement utilisateur, UE, par
- la réception depuis l'UE des résultats de mesure de signal de référence d'information d'état de canal, CSI-RSRP, mis en oeuvre par l'UE sur chacun des N points de transmission,
- l'obtention d'informations selon lesquelles au moins un point de transmission dans la cellule partagée neutralise une transmission de signal de référence spécifique de la cellule, CRS, et
- l'utilisation des informations obtenues pour :
la détermination d'une position ou d'une localisation de l'UE en utilisant les informations obtenues et les résultats de mesure d'UE, pour déterminer qu'un point de transmission qui n'est pas neutralisé et ayant le CSI-RSRP le plus élevé par rapport aux autres N points de transmission est le point de transmission le plus proche de l'UE.

2. Noeud de réseau (100) pour un réseau de communication sans fil, le noeud de réseau (100) étant conçu pour un fonctionnement dans une cellule partagée avec un nombre de N points de transmission, le noeud de réseau (100) étant en outre conçu pour déterminer lequel des N points de transmission est le plus proche d'un équipement utilisateur, UE, en étant conçu pour recevoir de l'UE des résultats de mesure de signal de référence d'information d'état de canal, CSI-RSRP, mis en oeuvre par l'UE sur chacun des N points de transmission et obtenir des informations selon lesquelles au moins un point de transmission dans la cellule partagée neutralise une transmission de signal de référence spécifique de la cellule, CRS ; le noeud de réseau (100) étant en outre conçu pour utiliser les informations obtenues pour :
- déterminer une position ou une localisation de l'UE en utilisant les informations obtenues et les résultats de mesure d'UE, pour déterminer qu'un point de transmission qui n'est pas neutralisé et ayant le CSI-RSRP le plus élevé par rapport aux autres N points de transmission est le point de transmission le plus proche de l'UE.

3. Procédé d'exploitation d'un équipement utilisateur (10), UE, desservi par un noeud de réseau (100) dans une cellule partagée avec un nombre de N points de transmission, le procédé comprenant :
- la détermination duquel des N points de transmission est le plus proche de l'UE par :
- la mise en oeuvre de mesures de signal de référence d'information d'état de canal, CSI-RSRP, sur un CSI-RS qui est spécifique de chaque point de transmission ;
- l'obtention d'informations selon lesquelles au moins un point de transmission dans la cellule partagée neutralise une transmission de signal de référence spécifique de la cellule, CRS ;
- la détermination d'une position ou d'une localisation de l'UE en utilisant les informations obtenues et les résultats de mesure d'UE, pour déterminer qu'un point de transmission qui n'est pas neutralisé et ayant le CSI-RSRP le plus élevé par rapport aux autres N points de transmission est le point de transmission le plus proche de l'UE.

4. Équipement utilisateur (10), UE, pour un réseau de communication sans fil, l'UE (10) étant conçu pour être desservi par un noeud de réseau dans une cellule partagée avec un nombre de N points de transmission, l'UE (10) étant conçu pour
- déterminer lequel des N points de transmission est le plus proche de l'UE en étant conçu pour
- la mise en oeuvre de mesures de signal de référence d'information d'état de canal, CSI-RSRP, sur un CSI-RS qui est spécifique de chaque point de transmission ;
- l'obtention d'informations selon lesquelles au moins un point de transmission dans la cellule partagée neutralise une transmission de CRS ;
- la détermination d'une position ou d'une localisation de l'UE en utilisant les informations obtenues et les résultats de mesure d'UE, pour déterminer qu'un point de transmission qui n'est pas neutralisé et ayant le CSI-RSRP le plus élevé par rapport aux autres N points de transmission est le point de transmission le plus proche de l'UE.

5. Produit programme comprenant un code exécutable par un circuit de commande, le code amenant le circuit de commande à mettre en oeuvre et/ou à commander un procédé selon la revendication 1 ou 3.

6. Milieu porteur transportant et/ou stockant un programme informatique selon la revendication 5 et/ou un code exécutable par des circuits de commande, le code amenant les circuits de commande à mettre en oeuvre et/ou à commander un procédé selon la revendication 1 ou 3
